# EUROPÄISCHE PATENTSCHRIFT

(11) **EP 2 543 528 B1**
(45) Veröffentlichungstag und Bekanntmachung des Hinweises auf die Patenterteilung: **10.01.2018**
(21) Anmeldenummer: 12165905.6
(22) Anmeldetag: 27.04.2012
(51) Int. Cl.: B60G 17/019, B60G 21/055

(54) **Geteilter Wankstabilisator**
Divided stabiliser bar
Barre stabilisatrice divisée

(30) Priorität: 07.07.2011 DE 102011078821
(43) Veröffentlichungstag der Anmeldung: 09.01.2013
(60) Teilanmeldung: 17001501.0
(73) Patentinhaber: Schaeffler Technologies AG & Co. KG, 91074 Herzogenaurach (DE)
(72) Erfinder: Wittmann, Bernd, 96178 Pommersfelden (DE); Mayer, Ralf, 91074 Herzogenaurach (DE); Lottes, Andrea, 96193 Wachenroth (DE); Hofmann, Norbert, 91074 Herzogenaurach (DE)

(56) Entgegenhaltungen:
- DE-A1-102006 040 109
- DE-A1-102008 001 006
- DE-A1-102009 028 386
- DE-A1-102010 037 555

## Beschreibung

### Beischreibung für folgende(n) Vertragsstaat(en) : AT, BE, CH, DK, ES, FR, GB, GR, IT, LI, LU, MC, NL, SE

Die vorliegende Erfindung betrifft einen geteilten Wankstabilisator. Wankstabilisatoren werden zum Vermeiden von Wankbewegungen des Fahrzeugaufbaus gegenüber der Fahrbahn eingesetzt.

Bei aktiven Wankstabilisatoren kann zwischen zwei Stabilisatorteilen des Wankstabilisators ein Aktuator wirksam angeordnet sein. Der Aktuator kann beide Stabilisatorteile mit einem Torsionsmoment beaufschlagen. Der Aktuator kann beispielsweise einen hydraulischen oder einen elektrischen Antrieb aufweisen. Unter Betätigung des Aktuators werden die beiden Stabilisatorteile zueinander verdreht, wobei ein Torsionsmoment in den Stabilisatorteilen anliegt, Die Stabilisatorteile können als Drehstabfedern ausgebildet sein.

Bei schnellem Fahrtrichtungswechsel neigt der Fahrzeugaufbau zu Wankbewegungen, die mithilfe eines aktiven Wankstabilisators kompensiert werden können.

Damit der Aktuator gezielt eingesetzt werden kann, werden Parameter wie eine Wankbewegung des Fahrzeugaufbaus oder eine Querbeschleunigung des Fahrzeugs erfasst. Mit diesen Parametern kann der Aktuator gezielt betätigt werden, um einem Wanken entgegen zu wirken. Für die gezielte Betätigung des Aktuators wird üblicherweise eine Mess- und Regeleinrichtung eingesetzt, die mit den eingangsseitigen Parametern eine Betätigung des Aktuators für eine angestrebte Kompensation der Wankbewegung ermöglicht. Der Aktuator beaufschlagt die angeschlossenen Stabilisatorteile mit einem Drehmoment oder Torsionsmoment, das dem Wanken entgegenwirkt. Die Erfassung von Messgrößen wie beispielsweise der Querbeschleunigung oder der Wankbewegung erfordert zusätzlichen Aufwand für die Bereitstellung von aktiven Wankstabilisatoren.

Aus DE102006040109A1 ist ein geteilter Wankstabilisator nach den Merkmalen des Oberbegriffs des Anspruchs 1 bekannt geworden. Ein Schwenkmotor weist ein Gehäuse auf, das mit einem Stabilisatorteil zur Drehmomentübertragung verbunden ist. An einem Gehäuseteil ist ein Sensor angeordnet, der vorzugsweise einen Torsionswinkel des Stabilisatorteils erfassen soll.

Aus DE102009028386 A1 ist ein geteilter Wankstabilisator mit Aktuator bekannt geworden, dessen Sensorik dazu vorgesehen ist, einen Verdrehwinkel zu erfassen. Ein magnetostriktiver Radialsensor ist als separates Teil an einer Stelle an dem Gehäuse des Aktuators befestigt. Mit dieser Anordnung kann eine Torsionsverformung in Form eines Differenzdrehwinkels zwischen dem Gehäuse und der Steuereinrichtung im Bereich der Sensoreinrichtung ermittelt werden.

Aus DE102008001006 A1 ist eine Radaufhängung für ein Fahrzeug bekannt geworden. Für die Ermittlung einer auf die Radaufhängung wirkenden Kraft wird ein Bauteil mit einer Bohrung versehen, deren Verformung unter Last mittels einer Messanordnung gemessen wird. Die Messanordnung kann eine magnetisch kodierte Hülse umfassen, die mit dieser Bohrung versehen ist. Die Verformung der Bohrung führt zu einer Änderung der magnetischen Eigenschaften der Hülse, was mittels einer magnetempfindlichen Sensoranordnung erfasst werden kann.

Aufgabe der vorliegenden Erfindung konnte es gewesen sein, einen geteilten Wankstabilisator gemäß den Merkmalen des Oberbegriffs des Anspruchs 1 anzugeben, der auf einfache Art und Weise die Erfassung von Drehmomenten ermöglicht.

Aufgabe der vorliegenden Erfindung war es, einen geteilten Wankstabilisator anzugeben, der eine Reduzierung dieses Aufwandes ermöglicht.

Erfindungsgemäß wurde diese Aufgabe durch den geteilten Wankstabilisator gemäß Anspruch 1 gelöst. Mit dem erfindungsgemäß vorgesehenen magnetisch kodierten Anschlussteil kann ein in dem geteilten Wankstabilisator wirkendes Torsionsmoment in ein magnetisches Signal umgewandelt werden; eine Torsion des Anschlussteiles generiert ein magnetisches Signal, das abhängig ist von dem anliegenden Torsionsmoment. Das Anschlussteil übernimmt in erfinderischer Weise eine Doppelfunktion; einerseits übernimmt es die Übertragung des wirkenden Torsionsmomentes zwischen dem anschließbaren Aktuator und dem angeschlossenen Stabilisatorteil; andererseits erzeugt das Anschlussteil ein magnetisches Signal, das abhängig ist von einem anliegenden Torsionsmoment. Da das Anschlussteil das volle Torsionsmoment überträgt, ist das magnetische Signal des magnetisch kodierten Anschlussteiles unmittelbare Folge des tatsächlich wirkenden Torsionsmomentes. Das tatsächlich wirkende Torsionsmoment kann als Messgröße für eine Regeleinrichtung eingesetzt werden, um den anschließbaren Aktuator gezielt zu betätigen.

Das Anschlussteil kann als Flansch ausgebildet sein, der einerseits an den Aktuator angeflanscht oder drehfest mit dem Aktuator verbunden werden kann und der andererseits drehfest mit dem Stabilisatorteil verbunden werden kann. Das Anflanschen kann über Schrauben erfolgen, die den Flansch mit dem Aktuator verschrauben. Alternative drehfeste Verbindungen können vorgesehen werden. Wenn das Stabilisatorteil als beispielsweise stabförmige Drehstabfeder ausgebildet ist, kann das eine dem Aktuator zugewandte Ende des Stabilisatorteiles in eine Aufnahme des Flansches eingesetzt und mit diesem drehfest verbunden werden.

Der Aktuator kann wirksam zwischen den beiden Stabilisatorteilen angeordnet sein, um ein erzeugtes Torsionsmoment einerseits in das eine Stabilisatorteil und andererseits in das andere Stabilisatorteil einzuleiten.

Die Anschlussteile können kompakte, einstückig hergestellte Bauteile sein; bei Flanschverbindungen können Flansche als Anschlussteile bereitgestellt werden, die als Massenprodukt kostengünstig durch spanlose Umformung hergestellt werden können.

Die gemäß der Erfindung vorzugsweise aus ferromagnetischem Stahl hergestellten Anschlussteile können auf einfache Art und Weise magnetisch kodiert werden und einen Primärsensor bilden, wie er nachstehend näher beschrieben ist.

Das erfindungsgemäß vorgesehene Anschlussteil eignet sich in hervorragender Weise für ein berührungsloses Messen des Torsionsmomentes. Torsionsmomente können berührungslos gemessen werden, wobei ein Sensor vorgesehen werden kann, der das magnetisch kodierte Anschlussteil als Primärsensor aufweist und ferner einen als Sekundärsensor bezeichneten Magnetfeldsensor. Das magnetische Signal des Primärsensors kann mittels des Magnetfeldsensors in ein elektrisches Signal umgewandelt und für eine gezielte Betätigung des Aktuators verwendet werden,

Dieses an sich bekannte magnetostriktive Messprinzip ist beispielsweise in der Druckschrift WO 2006/013093 A2 offenbart.

Bei diesem Messprinzip wird eine Veränderung der magnetischen Eigenschaft erfasst.

In dem Internetauftritt der Firma NCTE werden zu dem magnetostriktiven Messprinzip Ausführungen gemacht, die nachstehend auszugsweise und teilweise geändert wiedergegeben sind:
Wird ein ferromagnetischer Kristall magnetisiert, so tritt mit wachsender Feldstärke eine Formänderung des magnetisierten Kristalls auf, die als magnetostriktiver Effekt bezeichnet wird.

Der wichtigste Anteil der Magnetostriktion ist der Joule-Effekt. Er basiert darauf, dass sich die so genannten Weiss'schen Bezirke in die Magnetisierungsrichtung drehen und ihre Grenzen verschieben. Hierdurch erfolgt eine Formänderung des ferromagnetischen Körpers, wobei sein Volumen konstant bleibt. Mit der Bezeichnung magnetostriktiver Effekt wird dieser Effekt beschrieben, da die Volumenänderung der gängigen magnetostriktiven Werkstoffe in ihrer Wirkung vernachlässigt werden kann.

Eine dauerhafte Speicherung einer "in-sich-geschlossenen" Magnetfeldstruktur in ferromagnetischen Materialien ist ermöglicht. Mit Hilfe von magnetisch kodierten Messwellen können mechanische Kräfte in Echt-Zeit gemessen und bestimmt werden.

Das "Pulsed Current Magnetic Enkoding" bezeichnet ein magnetisches Kodierungsverfahren. Hierbei werden mehrere verschiedene Signalfrequenzen mit unterschiedlich gepulster Stromstärke über einen zuvor festgelegten Bereich einer Welle geleitet, und dabei "in-sich-geschlossene" Magnetfeldstrukturen in die Messwelle einprogrammiert. Dieser Vorgang muss nur einmal durchgeführt werden, da die hierbei gebildeten Strukturen in sich geschlossen sind und somit einen stabilen Zustand darstellen.

Im Unterschied zu anderen bekannten Verfahren zur Messung von Kräften können mit diesem magnetischen Kodierungsverfahren berührungslos Drehmomente, Biegekräfte, axiale Kräfte, radiale Kräfte und Scherkräfte gemessen werden. Es können an ein und derselben kodierten Messstelle mehrere physikalische Parameter gleichzeitig gemessen werden. Darüber hinaus ist der Betriebstemperaturbereich von -50°C bis über +250°C gewährleistet. Der Sensor ist unempfindlich gegen Schmutz, Öl, Wasser sowie mechanische Schockbelastungen und verfügt über eine sehr hohe Messgenauigkeit und eine Ausgangssignallinearität von bis zu 0.05% Die Signalbandbreite kann bis zu 30kHz betragen und es ist keine regelmäßige Wartung oder Nachkalibrierung des Sensors erforderlich.

Der Sensor kann den Primärsensor sowie den Sekundärsensor umfassen.

Der Primärsensor kann eine Region der Welle sein, die magnetisch kodiert wird. Es ist ausreichend, den Kodierungsprozess lediglich einmal durchzuführen, vorzugsweise bevor die Welle an ihrem vorgesehenen Einbauort eingebaut wird. Die mechanischen Eigenschaften der Welle werden durch den Kodierungsprozess nicht beeinflusst. Die Welle sollte aus ferromagnetischem Material bestehen. Im Allgemeinen ist industrieller Stahl, der zwischen 1.5% und 8% Ni enthält, eine gute Basis für einen derartigen Primärsensor. Der Primärsensor wandelt die anliegenden Kräfte in ein magnetisches Signal um, das auf der Oberfläche der Welle erfasst werden kann. Die Welle kann als Voll- oder Hohlwelle ausgeführt sein.

Der Sekundärsensor ist eine Anordnung von Magnetfeld-Sensoren, die in unmittelbarer Nähe der magnetisch kodierten Region der Welle platziert werden.

Da die Sekundärsensoren die Welle nicht berühren, kann die Welle frei rotieren. Der Sekundärsensor setzt Änderungen des magnetischen Feldes - verursacht durch Kräfte im Primärsensor - in elektrische Information um.

Der Sekundärsensor kann sowohl außen als auch innerhalb der Welle platziert werden, da das Sensorsignal auf der Außen- wie auch auf der Innenseite ermittelt werden kann.

Der Sekundärsensor kann durch Spulen gebildet sein, um die magnetischen Veränderungen des Primärsensors unter Drehmoment hoch auflösend zu messen. Die Spulen können paarweise angeordnet sein, um eine Gleichtaktunterdrückung durch Differentialmessungen zu ermöglichen, und somit die Effekte von externen Magnetfeldern zu kompensieren. Die Gleichtaktunterdrückung beruht hauptsächlich auf einer einwandfreien Anordnung und guten Abstimmung der Spulen zueinander.

Zum Messen von Drehmomenten kann der Sekundärsensor parallel zur Achse der Welle und symmetrisch zum Zentrum des magnetisch kodierten Bereichs - also des Primärsensors - angeordnet werden. Die Spulen des Sekundärsensors werden in der Regel paarweise angeordnet; das so genannte Spulenpaar. Die Spulenpaare werden je nach Anzahl symmetrisch über den Umfang der Welle verteilt, Durch das Verwenden von mehr als einem Spulenpaar können radiale Toleranzen der Welle kompensiert werden.

Die vorliegende Erfindung hat erkannt, dass ein nach dem vorstehend beschriebenen magnetostriktiven Prinzip arbeitender Sensor hervorragend für einen geteilten Wankstabilisator geeignet ist.

Bei dieser erfindungsgemäßen Weiterbildung umfasst der Sensor den magnetisch kodierten Primärsensor sowie den Sekundärsensor, der Veränderungen der magnetischen Eigenschaften des Primärsensors in ein elektrisches Signal umwandeln kann.

Das Anschlussteil kann beispielsweise durch eine Welle oder durch eine Hülse oder durch einen Flansch gebildet sein, der magnetisch kodiert ist; diese Kodierung kann in der oben beschriebenen Weise erfolgen.

Der Sekundärsensor kann als passives Element ausgebildet sein und eine Spule umfassen, die magnetische Veränderungen des Primärsensors erfassen und in ein elektrisches Signal umsetzen kann. Dieses Signal kann beispielsweise einer Regeleinrichtung zugeführt werden, die für eine Betätigung des Aktuators vorgesehen ist. Der Sekundärsensor kann auch als aktives Element ausgeführt sein.

Das Stabilisatorteil kann vorteilhaft als Drehstabfeder ausgebildet sein, wobei der Primärsensor direkt im Kraftfluss oder Lastpfad der Drehstabfeder liegt, also das volle Torsionsmoment überträgt.

Über den Primärsensor kann der Sekundärsensor angeordnet werden, der die Änderung der magnetischen Eigenschaften des Primärsensors erfasst. Werden die Drehstabfedern auf Torsion belastet, so wird das magnetische kodierte Anschlußteil ebenfalls mit diesem Torsionsmoment beaufschlagt. Unter diesem Torsionsmoment ändern sich die Feldlinien in dem magnetisch kodierten Anschlußteil, wobei die Änderung durch den Sekundärsensor gemessen und in ein elektrisches Signal umgewandelt werden kann.

Bei einer erfindungsgemäßen Weiterbildung sind die Stabilisatorteile in Stabilastorlagern gelagert und jeweils mit einem Anschlußteil zum Anschließen eines Aktuators versehen. Es kann ausreichend sein, nur eines der beiden Anschlussteile magnetisch zu kodieren, so dass der Primärsensor gebildet ist. Das Stabilisatorlager lagert das Stabilisatorteil am Fahrzeugaufbau und ermöglicht Drehbewegungen des Stabilisatorteiles um die Torsionsachse.

Das ohnehin vorgesehene Anschlussteil kann aus magnetostriktivem Material hergestellt und magnetisch kodiert werden und ist somit erfindungsgemäß geeignet für ein berühruingsloses Erfassen eines wirkenden Torsionsmomentes. Es wird kein separater Primärsensor benötigt, der unter einem Torsionsmoment seine magnetischen Eigenschaften verändert.

Die Anbindung des magnetisch kodierten Anschlußteiles an das Stabilisatorteil kann reibschlüssig mittels Pressverband, stoffschlüssig oder formschlüssig erfolgen.

Wenn das Anschlussteil als Flansch ausgeführt ist, bietet sich an, den Flansch hohl auszuführen. Ein derartiger Flansch ist vom Gewicht her gegenüber massiven Flanschen leichter. Der Sekundärsensor kann in dem hohlen Flansch angeordnet werden, so dass zusätzlicher Bauraumbedarf für den Sekundärsensor entfällt.

Nachstehend wird die Erfindung anhand von vier Figuren näher erläutert. Es zeigen:
- Figur 1: einen erfindungsgemäßen geteilten Wankstabilisator,
- Figur 2: einen vergrößerten Ausschnitt aus Figur 1,
- Figur 3 2, und: eine erfindungsgemäße Variante in einer Darstellung wie in Figur
- Figur 4: die Variante gemäß Figur 3 in perspektivischer Darstellung.

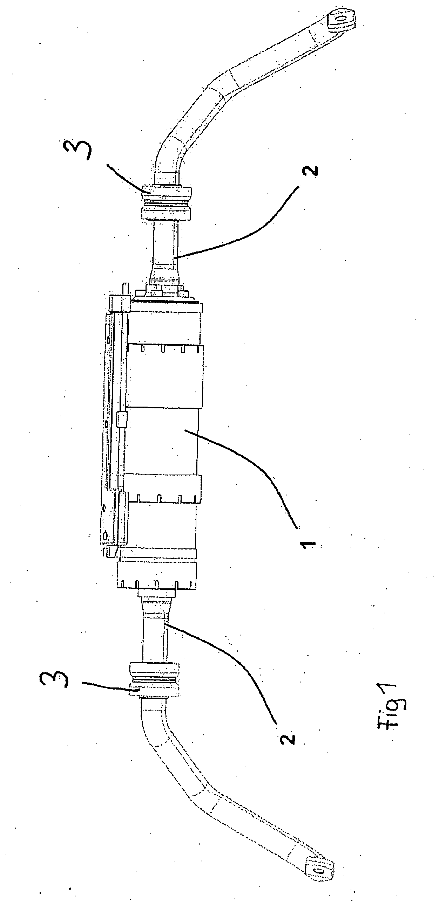

Figur 1 zeigt einen erfindungsgemäßen geteilten Wankstabilisator mit einem angeschlossenen Aktuator 1. Der Aktuator 1 ist wirksam zwischen zwei jeweils als Drehstabfeder 2 ausgebildeten Stabilisatorteilen 2a angeordnet. Beide Stabilisatorteile 2a sind jeweils über ein Stabilisatorlager 3 an einem hier nicht dargestellten Fahrzeugaufbau drehbar gelagert. Der Aktuator 1 kann einen Motor mit einem angeschlossenen Getriebe aufweisen, wobei ein Aktuatorgehäuse an das eine Stabilisatorteil 2a und eine Ausgangswelle an das andere Stabilisatorteil 2a angeschlossen werden kann. Unter Betätigung des Aktuators 1 werden die angeschlossenen Stabilisatorteile 2a auf Torsion beansprucht.

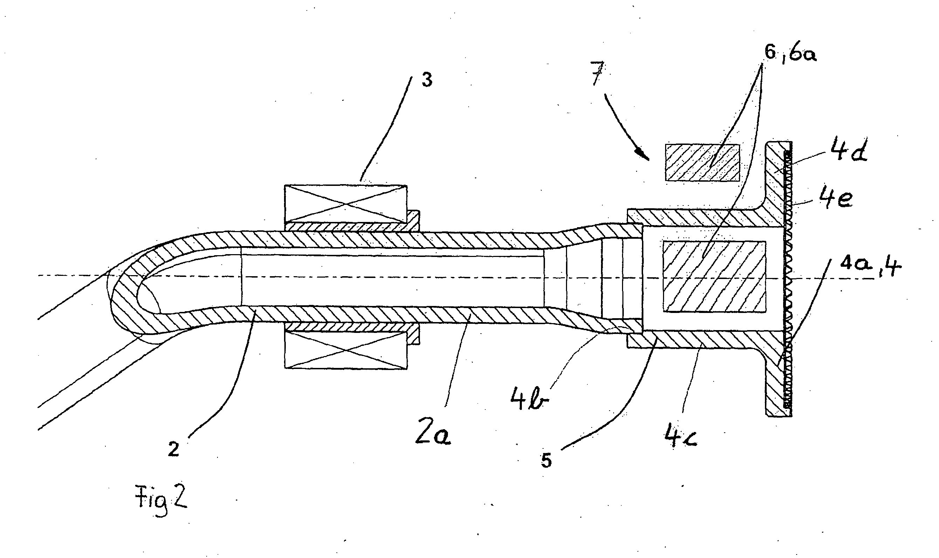

Figur 2 zeigt einen vergrößerten Ausschnitt aus Figur 1.

Ein Sensor 7 zur berührungslosen Messung des Aktuatormomentes weist einen magnetisch kodierten Primärsensor 5 sowie einen als Sekundärsensor 6 bezeichneten Magnetfeldsensor 6a auf. Das Aktuatormoment ist das in den Stabilisatorteilen 2a wirkende Torsionsmoment.

Das Stabilisatorteil 2a ist an seinem dem - nicht abgebildeten - Aktuator zugewandten Ende mit einem Anschlussteil 4a versehen, das an den Aktuator 1 zur Übertragung des Torsionsmomentes angeschlossen ist. Das Anschlussteil 4a ist im Ausführungsbeispiel als Flansch 4 ausgebildet.

Der Flansch 4 ist einerseits drehfest an das Stabilisatorteil 2a und das andererseits drehfest an den Aktuator 1 angeschlossen. Der Flansch 4 kann an den Aktuator 1 mit Schrauben angeschraubt werden; der Flansch 4 kann auch stoff-, reib- oder kraftschlüssig mit dem Aktuator 1 verbunden werden.

Im Ausführungsbeispiel ist der Flansch 4 hohl ausgebildet, wobei das an seinem Ende kreisringförmig ausgebildete Stabilisatorteil 2a in einen ringförmigen Absatz 4b des Flansches 4 eingreift. Der Flansch 4 und das Stabilisatorteil 2a sind stoffschlüssig miteinander verbunden.

Der Flansch 4 weist einen hülsenförmigen Abschnitt 4c auf, an dessen von dem ringförmigen Absatz 4b abgewandten axialen Ende einstückig ein Radialbord 4d angeformt ist. Der Radialbord 4d ist an seiner dem nicht abgebildeten Aktuator zugewandten Stirnseite mit einer Verzahnung 4e versehen, die in eine an dem Aktuator vorgesehene Gegenverzahnung formschlüssig eingreift. Der Flansch 4 ist über nicht abgebildete Schrauben mit dem Aktuator verschraubt, wobei die Schrauben durch in dem Radialbord vorgesehene Durchgangsöffnungen durchgeführt sind.

Der Flansch 4 ist aus magnetostriktivem Material gebildet und magnetisch kodiert und bildet den Primärsensor 5. Der Primärsensor 5 überträgt das volle Torsionsmoment des Wankstabilisators. Es kann genügen, lediglich den hülsenförmigen Abschnitt 4c des Flansches 4 magnetisch zu kodieren.

Der Sekundärsensor 6 ist in der Figur 2 alternativ innerhalb und außerhalb des hohlen Flansches 4 angeordnet. Der Sekundärsensor 6 misst die durch Torsion des Primärsensors 5 verursachte Änderung der magnetischen Eigenschaften des Flansches 4. Durch die Anordnung des Sekundärsensors 6 innerhalb des hohlen Flansches sind eine platzsparende Anordnung und ein wirkungsvoller Schutz des Sensors 7 erreicht

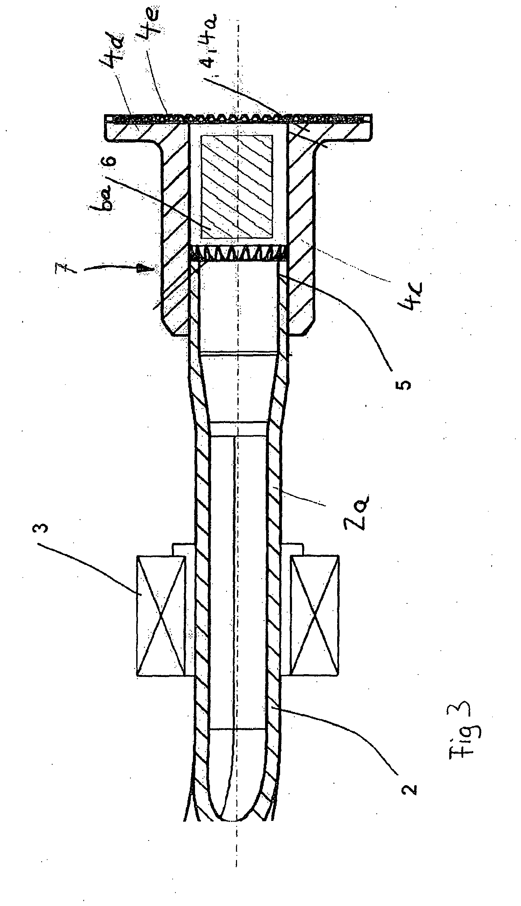

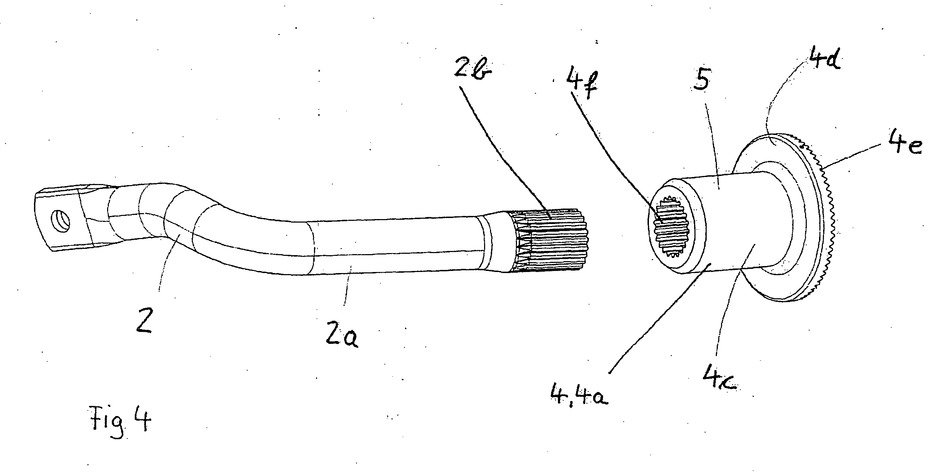

Der in den Figuren 3 und 4 abgebildete erfindungsgemäße geteilte Wankstabilisator unterscheidet sich von dem zuvor beschriebenen lediglich dadurch, dass anstelle einer stoffschlüssigen Verbindung zwischen dem Flansch 4 und dem Stabilisatorteil 2a eine formschlüssige Verbindung vorgesehen ist. Der Sekundärsensor 6 ist innerhalb des hohlen Flansches 4 angeordnet. Der Sekundärsensor 6 kann auch radial außerhalb des hohlen Flansches 4 angeordnet werden.

Der modifizierte hohl ausgeführte Flansch 4 weist am Innenumfang des hülsenförmigen Abschnitts 4c ein inneres Kerbzahnprofil 4f auf. Das Stabilisatorteil 2a weist an seinem dem Flansch 4 zugewandten Ende an seinem Außenumfang ein äußeres Kerbzahnprofil 2b auf. Das Stabilisatorteil 2a ist mit diesem Ende in den Radialflansch 4 eingesteckt, wobei die Kerbzahnprofile 2b, 4f formschlüssig zur Übertragung von Drehmomenten ineinandergreifen.

Die Primärsensoren können bei erfindungsgemäßen geteilten Wankstabilisatoren an lediglich einem der beiden Stabilisatorteile 2a angeordnet sein; es ist jedoch möglich, beide Stabilisatorteile 2a mit je einem Primärsensor 5 zu versehen. Es können auch beide an die Stabilisatorteile 2a angeschlossenen Anschlussteile 4a als Primärsensor 5 ausgebildet sein, wobei jedoch lediglich ein Sekundärsensor 6 einem der beiden Primärsensoren 5 zugeordnet wird. Auf diese Weise entfällt eine Unterscheidung der Anschlussteile 4a in magnetisch kodierte und magnetisch nicht kodierte Anschlussteile 4a.

### Bezugszahlenliste

- 1: Aktuator
- 2: Drehstabfeder
- 2a: Stabilisatorteil
- 2b: äußeres Kerbzahnprofil
- 3: Stabilisatorlager
- 4: Flansch
- 4a: Anschlussteil
- 4b: ringförmiger Absatz
- 4c: hülsenförmiger Absatz
- 4d: Radialbord
- 4e: Verzahnung
- 4f: inneres Kerbzahnprofil
- 5: magnetisch kodierter Primärsensor
- 6: Sekundärsensor
- 6a: Magnetfeldsensor
- 7: Sensor

### Beischreibung für folgende(n) Vertragsstaat(en) : DE

Die vorliegende Erfindung betrifft einen geteilten Wankstabilisator. Wankstabilisatoren werden zum Vermeiden von Wankbewegungen des Fahrzeugaufbaus gegenüber der Fahrbahn eingesetzt.

Bei aktiven Wankstabilisatoren kann zwischen zwei Stabilisatorteilen des Wankstabilisators ein Aktuator wirksam angeordnet sein. Der Aktuator kann beide Stabilisatorteile mit einem Torsionsmoment beaufschlagen. Der Aktuator kann beispielsweise einen hydraulischen oder einen elektrischen Antrieb aufweisen. Unter Betätigung des Aktuators werden die beiden Stabilisatorteile zueinander verdreht, wobei ein Torsionsmoment in den Stabilisatorteilen anliegt. Die Stabilisatorteile können als Drehstabfedern ausgebildet sein.

Bei schnellem Fahrtrichtungswechsel neigt der Fahrzeugaufbau zu Wankbewegungen, die mithilfe eines aktiven Wankstabilisators kompensiert werden können.

Damit der Aktuator gezielt eingesetzt werden kann, werden Parameter wie eine Wankbewegung des Fahrzeugaufbaus oder eine Querbeschleunigung des Fahrzeugs erfasst. Mit diesen Parametern kann der Aktuator gezielt betätigt werden, um einem Wanken entgegen zu wirken, Für die gezielte Betätigung des Aktuators wird üblicherweise eine Mess- und Regeleinrichtung eingesetzt, die mit den eingangsseitigen Parametern eine Betätigung des Aktuators für eine angestrebte Kompensation der Wankbewegung ermöglicht. Der Aktuator beaufschlagt die angeschlossenen Stabilisatorteile mit einem Drehmoment oder Torsionsmoment, das dem Wanken entgegenwirkt. Die Erfassung von Messgrößen wie beispielsweise der Querbeschleunigung oder der Wankbewegung erfordert zusätzlichen Aufwand für die Bereitstellung von aktiven Wankstabilisatoren.

Aus DE102006040109A1 ist ein geteilter Wankstabilisator nach den Merkmalen des Oberbegriffs des Anspruchs 1 bekannt geworden. Ein Schwenkmotor weist ein Gehäuse auf, das mit einem Stabilisatorteil zur Drehmomentübertragung verbunden ist. An einem Gehäuseteil ist ein Sensor angeordnet, der vorzugsweise einen Torsionswinkel des Stabilisatorteils erfassen soll.

Aus DE102009028386 A1 ist ein geteilter Wankstabilisator mit Aktuator bekannt geworden, dessen Sensorik dazu vorgesehen ist, einen Verdrehwinkel zu erfassen. Ein magnetostriktiver Radialsensor ist als separates Teil an einer Stelle an dem Gehäuse des Aktuators befestigt. Mit dieser Anordnung kann eine Torsionsverformung in Form eines Differenzdrehwinkels zwischen dem Gehäuse und der Steuereinrichtung im Bereich der Sensoreinrichtung ermittelt werden.

Aus DE102008001006 A1 ist eine Radaufhängung für ein Fahrzeug bekannt geworden. Für die Ermittlung einer auf die Radaufhängung wirkenden Kraft wird ein Bauteil mit einer Bohrung versehen, deren Verformung unter Last mittels einer Messanordnung gemessen wird. Die Messanordnung kann eine magnetisch kodierte Hülse umfassen, die mit dieser Bohrung versehen ist. Die Verformung der Bohrung führt zu einer Änderung der magnetischen Eigenschaften der Hülse, was mittels einer magnetempfindlichen Sensoranordnung erfasst werden kann.

Aufgabe der vorliegenden Erfindung konnte es gewesen sein, einen geteilten Wankstabilisator gemäß den Merkmalen des Oberbegriffs des Anspruchs 1 anzugeben, der auf einfache Art und Weise die Erfassung von Drehmomenten ermöglicht.

Aufgabe der vorliegenden Erfindung war es, einen geteilten Wankstabilisator anzugeben, der eine Reduzierung dieses Aufwandes ermöglicht.

Erfindungsgemäß wurde diese Aufgabe durch den geteilten Wankstabilisator gemäß Anspruch 1 gelöst. Mit dem erfindungsgemäß vorgesehenen magnetisch kodierten Anschlussteil kann ein in dem geteilten Wankstabilisator wirkendes Torsionsmoment in ein magnetisches Signal umgewandelt werden; eine Torsion des Anschlussteiles generiert ein magnetisches Signal, das abhängig ist von dem anliegenden Torsionsmoment. Das Anschlussteil übernimmt in erfinderischer Weise eine Doppelfunktion: einerseits übernimmt es die Übertragung des wirkenden Torsionsmomentes zwischen dem anschließbaren Aktuator und dem angeschlossenen Stabilisatorteil; andererseits erzeugt das Anschlussteil ein magnetisches Signal, das abhängig ist von einem anliegenden Torsionsmoment. Da das Anschlussteil das volle Torsionsmoment überträgt, ist das magnetische Signal des magnetisch kodierten Anschlussteiles unmittelbare Folge des tatsächlich wirkenden Torsionsmomentes. Das tatsächlich wirkende Torsionsmoment kann als Messgröße für eine Regeleinrichtung eingesetzt werden, um den anschließbaren Aktuator gezielt zu betätigen.

Das Anschlussteil kann als Flansch ausgebildet sein, der einerseits an den Aktuator angeflanscht oder drehfest mit dem Aktuator verbunden werden kann und der andererseits drehfest mit dem Stabilisatorteil verbunden werden kann. Das Anflanschen kann über Schrauben erfolgen, die den Flansch mit dem Aktuator verschrauben. Alternative drehfeste Verbindungen können vorgesehen werden. Wenn das Stabilisatorteil als beispielsweise stabförmige Drehstabfeder ausgebildet ist, kann das eine dem Aktuator zugewandte Ende des Stabilisatorteiles in eine Aufnahme des Flansches eingesetzt und mit diesem drehfest verbunden werden.

Der Aktuator kann wirksam zwischen den beiden Stabilisatorteilen angeordnet sein, um ein erzeugtes Torsionsmoment einerseits in das eine Stabilisatorteil und andererseits in das andere Stabilisatorteil einzuleiten.

Die Anschlussteile können kompakte, einstückig hergestellte Bauteile sein; bei Flanschverbindungen können Flansche als Anschlussteile bereitgestellt werden, die als Massenprodukt kostengünstig durch spanlose Umformung hergestellt werden können.

Die gemäß der Erfindung vorzugsweise aus ferromagnetischem Stahl hergestellten Anschlussteile können auf einfache Art und Weise magnetisch kodiert werden und einen Primärsensor bilden, wie er nachstehend näher beschrieben ist.

Das erfindungsgemäß vorgesehene Anschlussteil eignet sich in hervorragender Weise für ein berührungsloses Messen des Torsionsmomentes. Torsionsmomente können berührungslos gemessen werden, wobei ein Sensor vorgesehen werden kann, der das magnetisch kodierte Anschlussteil als Primärsensor aufweist und ferner einen als Sekundärsensor bezeichneten Magnetfeldsensor. Das magnetische Signal des Primärsensors kann mittels des Magnetfeldsensors in ein elektrisches Signal umgewandelt und für eine gezielte Betätigung des Aktuators verwendet werden.

Dieses an sich bekannte magnetostriktive Messprinzip ist beispielsweise in der Druckschrift WO 2006/013093 A2 offenbart.

Bei diesem Messprinzip wird eine Veränderung der magnetischen Eigenschaft erfasst.

In dem Internetauftritt der Firma NCTE werden zu dem magnetostriktiven Messprinzip Ausführungen gemacht, die nachstehend auszugsweise und teilweise geändert wiedergegeben sind:
Wird ein ferromagnetischer Kristall magnetisiert, so tritt mit wachsender Feldstärke eine Formänderung des magnetisierten Kristalls auf die als magnetostriktiver Effekt bezeichnet wird.

Der wichtigste Anteil der Magnetostriktion ist der Joule-Effekt. Er basiert darauf, dass sich die so genannten Weiss'schen Bezirke in die Magnetisierungsrichtung drehen und ihre Grenzen verschieben. Hierdurch erfolgt eine Formänderung des ferromagnetischen Körpers, wobei sein Volumen konstant bleibt. Mit der Bezeichnung magnetostriktiver Effekt wird dieser Effekt beschrieben, da die Volumenänderung der gängigen magnetostriktiven Werkstoffe in ihrer Wirkung vernachlässigt werden kann.

Eine dauerhafte Speicherung einer "in-sich-geschlossenen" Magnetfeldstruktur in ferromagnetischen Materialien ist ermöglicht. Mit Hilfe von magnetisch kodierten Messwellen können mechanische Kräfte in Echt-Zeit gemessen und bestimmt werden.

Das "Pulsed Current Magnetic Enkoding" bezeichnet ein magnetisches Kodierungsverfahren. Hierbei werden mehrere verschiedene Signalfrequenzen mit unterschiedlich gepulster Stromstärke über einen zuvor festgelegten Bereich einer Welle geleitet, und dabei "in-sich-geschlossene" Magnetfeldstrukturen in die Messwelle einprogrammiert. Dieser Vorgang muss nur einmal durchgeführt werden, da die hierbei gebildeten Strukturen in sich geschlossen sind und somit einen stabilen Zustand darstellen.

Im Unterschied zu anderen bekannten Verfahren zur Messung von Kräften können mit diesem magnetischen Kodierungsverfahren berührungslos Drehmomente, Biegekräfte, axiale Kräfte, radiale Kräfte und Scherkräfte gemessen werden. Es können an ein und derselben kodierten Messstelle mehrere physikalische Parameter gleichzeitig gemessen werden. Darüber hinaus ist der Betriebstemperaturbereich von -50°C bis über +250°G gewährleistet. Der Sensor ist unempfindlich gegen Schmutz, Öl, Wasser sowie mechanische Schockbelastungen und verfügt über eine sehr hohe Messgenauigkeit und eine Ausgangssignallinearität von bis zu 0.05% Die Signalbandbreite kann bis zu 30kHz betragen und es ist keine regelmäßige Wartung oder Nachkalibrierung des Sensors erforderlich.

Der Sensor kann den Primärsensor sowie den Sekundärsensor umfassen.

Der Primärsensor kann eine Region der Welle sein, die magnetisch kodiert wird. Es ist ausreichend, den Kodierungsprozess lediglich einmal durchzuführen, vorzugsweise bevor die Welle an ihrem vorgesehenen Einbauort eingebaut wird. Die mechanischen Eigenschaften der Welle werden durch den Kodierungsprozess nicht beeinflusst. Die Welle sollte aus ferromagnetischem Material bestehen. Im Allgemeinen ist industrieller Stahl, der zwischen 1.5% und 8% Ni enthält, eine gute Basis für einen derartigen Primärsensor. Der Primärsensor wandelt die anliegenden Kräfte in ein magnetisches Signal um, das auf der Oberfläche der Welle erfasst werden kann. Die Welle kann als Voll- oder Hohlwelle ausgeführt sein.

Der Sekundärsensor ist eine Anordnung von Magnetfeld-Sensoren, die in unmittelbarer Nähe der magnetisch kodierten Region der Welle platziert werden.

Da die Sekundärsensoren die Welle nicht berühren, kann die Welle frei rotieren. Der Sekundärsensor setzt Änderungen des magnetischen Feldes - verursacht durch Kräfte im Primärsensor - in elektrische Information um.

Der Sekundärsensor kann sowohl außen als auch innerhalb der Welle platziert werden, da das Sensorsignal auf der Außen- wie auch auf der Innenseite ermittelt werden kann.

Der Sekundärsensor kann durch Spulen gebildet sein, um die magnetischen Veränderungen des Primärsensors unter Drehmoment hoch auflösend zu messen. Die Spulen können paarweise angeordnet sein, um eine Gleichtaktunterdrückung durch Differentialmessungen zu ermöglichen, und somit die Effekte von externen Magnetfeldern zu kompensieren. Die Gleichtaktunterdrückung beruht hauptsächlich auf einer einwandfreien Anordnung und guten Abstimmung der Spulen zueinander.

Zum Messen von Drehmomenten kann der Sekundärsensor parallel zur Achse der Welle und symmetrisch zum Zentrum des magnetisch kodierten Bereichs - also des Primärsensors - angeordnet werden. Die Spulen des Sekundärsensors werden in der Regel paarweise angeordnet das so genannte Spulenpaar. Die Spulenpaare werden je nach Anzahl symmetrisch über den Umfang der Welle verteilt. Durch das Verwenden von mehr als einem Spulenpaar können radiale Toleranzen der Welle kompensiert werden.

Die vorliegende Erfindung hat erkannt, dass ein nach dem vorstehend beschriebenen magnetostriktiven Prinzip arbeitender Sensor hervorragend für einen geteilten Wankstabilisator geeignet ist.

Bei dieser erfindungsgemäßen Weiterbildung umfasst der Sensor den magnetisch kodierten Primärsensor sowie den Sekundärsensor, der Veränderungen der magnetischen Eigenschaften des Primärsensors in ein elektrisches Signal umwandeln kann.

Das Anschlussteil kann beispielsweise durch eine Welle oder durch eine Hülse oder durch einen Flansch gebildet sein, der magnetisch kodiert ist; diese Kodierung kann in der oben beschriebenen Weise erfolgen.

Der Sekundärsensor kann als passives Element ausgebildet sein und eine Spule umfassen, die magnetische Veränderungen des Primärsensors erfassen und in ein elektrisches Signal umsetzen kann. Dieses Signal kann beispielsweise einer Regeleinrichtung zugeführt werden, die für eine Betätigung des Aktuators vorgesehen ist. Der Sekundärsensor kann auch als aktives Element ausgeführt sein.

Das Stabilisatorteil kann vorteilhaft als Drehstabfeder ausgebildet sein, wobei der Primärsensor direkt im Kraftfluss oder Lastpfad der Drehstabfeder liegt, also das volle Torsionsmoment überträgt.

Über den Primärsensor kann der Sekundärsensor angeordnet werden, der die Änderung der magnetischen Eigenschaften des Primärsensors erfasst. Werden die Drehstabfedern auf- Torsion belastet, so wird das magnetische kodierte Anschlußteil ebenfalls mit diesem Torsionsmoment beaufschlagt. Unter diesem Torsionsmoment ändern sich die Feldlinien in dem magnetisch kodierten Anschlußteil, wobei die Änderung durch den Sekundärsensor gemessen und in ein elektrisches Signal umgewandelt werden kann,

Bei einer erfindungsgemäßen Weiterbildung sind die Stabilisatorteile in Stabilastorlagern gelagert und jeweils mit einem Anschlußteil zum Anschließen eines Aktuators versehen. Es kann ausreichend sein, nur eines der beiden Anschlussteile magnetisch zu kodieren, so dass der Primärsensor gebildet ist. Das Stabilisatorlager lagert das Stabilisatorteil am Fahrzeugaufbau und ermöglicht Drehbewegungen des Stabilisatorteiles um die Torsionsachse.

Das ohnehin vorgesehene Anschlussteil kann aus magnetostriktivem Material hergestellt und magnetisch kodiert werden und ist somit erfindungsgemäß geeignet für ein berühruingsloses Erfassen eines wirkenden Torsionsmomentes. Es wird kein separater Primärsensor benötigt, der unter einem Torsionsmoment seine magnetischen Eigenschaften verändert.

Die Anbindung des magnetisch kodierten Anschlußteiles an das Stabilisatorteil kann reibschlüssig mittels Pressverband, stoffschlüssig oder formschlüssig erfolgen.

Wenn das Anschlussteil als Flansch ausgeführt ist, bietet sich an, den Flansch hohl auszuführen. Ein derartiger Flansch ist vom Gewicht her gegenüber massiven Flanschen leichter. Der Sekundärsensor kann in dem hohlen Flansch angeordnet werden, so dass zusätzlicher Bauraumbedarf für den Sekundärsensor entfällt.

Nachstehend wird die Erfindung anhand von vier Figuren näher erläutert. Es zeigen:
- Figur 1: einen erfindungsgemäßen geteilten Wankstabilisator,
- Figur 2: einen vergrößerten Ausschnitt aus Figur 1,
- Figur 3 2, und: eine erfindungsgemäße Variante in einer Darstellung wie in Figur
- Figur 4: die Variante gemäß Figur 3 in perspektivischer Darstellung.

Figur 1 zeigt einen erfindungsgemäßen geteilten Wankstabilisator mit einem angeschlossenen Aktuator 1. Der Aktuator 1 ist wirksam zwischen zwei jeweils als Drehstabfeder 2 ausgebildeten Stabilisatorteilen 2a angeordnet. Beide Stabilisatorteile 2a sind jeweils über ein Stabilisatorlager 3 an einem hier nicht dargestellten Fahrzeugaufbau drehbar gelagert. Der Aktuator 1 kann einen Motor mit einem angeschlossenen Getriebe aufweisen, wobei ein Aktuatorgehäuse an das eine Stabilisatorteil 2a und eine Ausgangswelle an das andere Stabilisatorteil 2a angeschlossen werden kann. Unter Betätigung des Aktuators 1 werden die angeschlossenen Stabilisatorteile 2a auf Torsion beansprucht.

Figur 2 zeigt einen vergrößerten Ausschnitt aus Figur 1.

Ein Sensor 7 zur berührungslosen Messung des Aktuatormomentes weist einen magnetisch kodierten Primärsensor 5 sowie einen als Sekundärsensor 6 bezeichneten Magnetfeldsensor 6a auf. Das Aktuatormoment ist das in den Stabilisatorteilen 2a wirkende Torsionsmoment.

Das Stabilisatorteil 2a ist an seinem dem - nicht abgebildeten - Aktuator zugewandten Ende mit einem Anschlussteil 4a versehen, das an den Aktuator 1 zur Übertragung des Torsionsmomentes angeschlossen ist. Das Anschlussteil 4a ist im Ausführungsbeispiel als Flansch 4 ausgebildet.

Der Flansch 4 ist einerseits drehfest an das Stabilisatorteil 2a und das andererseits drehfest an den Aktuator 1 angeschlossen. Der Flansch 4 kann an den Aktuator 1 mit Schrauben angeschraubt werden; der Flansch 4 kann auch stoff-, reib- oder kraftschlüssig mit dem Aktuator 1 verbunden werden.

Im Ausführungsbeispiel ist der Flansch 4 hohl ausgebildet, wobei das an seinem Ende kreisringförmig ausgebildete Stabilisatorteil 2a in einen ringförmigen Absatz 4b des Flansches 4 eingreift. Der Flansch 4 und das Stabilisatorteil 2a sind stoffschlüssig miteinander verbunden.

Der Flansch 4 weist einen hülsenförmigen Abschnitt 4c auf, an dessen von dem ringförmigen Absatz 4b abgewandten axialen Ende einstückig ein Radialbord 4d angeformt ist. Der Radialbord 4d ist an seiner dem nicht abgebildeten Aktuator zugewandten Stirnseite mit einer Verzahnung 4e versehen, die in eine an dem Aktuator vorgesehene Gegenverzahnung formschlüssig eingreift. Der Flansch 4 ist über nicht abgebildete Schrauben mit dem Aktuator verschraubt, wobei die Schrauben durch in dem Radialbord vorgesehene Durchgangsöffnungen durchgeführt sind.

Der Flansch 4 ist aus magnetostriktivem Material gebildet und magnetisch kodiert und bildet den Primärsensor 5. Der Primärsensor 5 überträgt das volle Torsionsmoment des Wankstabilisators. Es kann genügen, lediglich den hülsenförmigen Abschnitt 4c des Flansches 4 magnetisch zu kodieren.

Der Sekundärsensor 6 ist in der Figur 2 alternativ innerhalb und außerhalb des hohlen Flansches 4 angeordnet. Der Sekundärsensor 6 misst die durch Torsion des Primärsensors 5 verursachte Änderung der magnetischen Eigenschaften des Flansches 4. Durch die Anordnung des Sekundärsensors 6 innerhalb des hohlen Flansches sind eine platzsparende Anordnung und ein wirkungsvoller Schutz des Sensors 7 erreicht

Der in den Figuren 3 und 4 abgebildete erfindungsgemäße geteilte Wankstabilisator unterscheidet sich von dem zuvor beschriebenen lediglich dadurch, dass anstelle einer stoffschlüssigen Verbindung zwischen dem Flansch 4 und dem Stabitisatorteil 2a eine formschlüssige Verbindung vorgesehen ist. Der Sekundärsensor 6 ist innerhalb des hohlen Flansches 4 angeordnet. Der Sekundärsensor 6 kann auch radial außerhalb des hohlen Flansches 4 angeordnet werden.

Der modifizierte hohl ausgeführte Flansch 4 weist am Innenumfang des hülsenförmigen Abschnitts 4c ein inneres Kerbzahnprofil 4f auf. Das Stabilisatorteil 2a weist an seinem dem Flansch 4 zugewandten Ende an seinem Außenumfang ein äußeres Kerbzahnprofil 2b auf. Das Stabilisatorteil 2a ist mit diesem Ende in den Radialflansch 4 eingesteckt, wobei die Kerbzahnprofile 2b, 4f formschlüssig zur Übertragung von Drehmomenten ineinandergreifen.

Die Primärsensoren können bei erfindungsgemäßen geteilten Wankstabilisatoren an lediglich einem der beiden Stabilisatorteile 2a angeordnet sein; es ist jedoch möglich, beide Stabilisatorteile 2a mit je einem Primärsensor 5 zu versehen. Es können auch beide an die Stabilisatorteile 2a angeschlossenen Anschlussteile 4a als Primärsensor 5 ausgebildet sein, wobei jedoch lediglich ein Sekundärsensor 6 einem der beiden Primärsensoren 5 zugeordnet wird. Auf diese Weise entfällt eine Unterscheidung der Anschlussteile 4a in magnetisch kodierte und magnetisch nicht kodierte Anschlussteile 4a.

### Bezugszahlenliste

- 1: Aktuator
- 2: Drehstabfeder
- 2a: Stabilisatorteil
- 2b: äußeres Kerbzahnprofil
- 3: Stabilisatorlager
- 4: Flansch
- 4a: Anschlussteil
- 4b: ringförmiger Absatz
- 4c: hülsenförmiger Absatz
- 4d: Radialbord
- 4e: Verzahnung
- 4f: inneres Kerbzahnprofil
- 5: magnetisch kodierter Primärsensor
- 6: Sekundärsensor
- 6a: Magnetfeldsensor
- 7: Sensor

## Patentansprüche (Patentansprüche für folgende(n) Vertragsstaat(en): AT, BE, CH, DK, ES, FR, GB, GR, IT, LI, LU, MC, NL, SE)

1. Geteilter Wankstabilisator eines Kraftfahrzeuges, zwischen dessen beiden Stabilisatorteilen (2a) ein Aktuator (1) für eine Torsion der Stabilisatorteile (2a) angeordnet ist, wobei ein Sensor (7) zur berührungslosen Messung eines in dem Stabilisatorteil (2a) wirkenden Torsionsmomentes vorgesehen ist, **dadurch gekennzeichnet, dass** wenigstens eines der Stabilisatorteile (2a) mit einem die Torsion übertragenden Anschlussteil (4a) zum Anschließen des Aktuators (1) versehen ist, wobei das Anschlussteil (4a) magnetisch kodiert ist, wobei der Sensor (7) das magnetisch kodierte Anschlussteil (4a) als Primärsensor (5) sowie einen Magnetfeldsensor (6a) als Sekundärsensor (6) aufweist, der Änderungen des magnetischen Feldes des Primärsensors (5) in ein elektrisches Signal umwandelt.

2. Geteilter Wankstabilisator nach Anspruch 1, bei dem das Anschlussteil (4a) einerseits drehfest mit dem Stabilisatorteil (2a) verbunden ist und andererseits drehfest mit dem Aktuator (1) verbunden ist.

3. Geteilter Wankstabilisator nach Anspruch 1, bei dem das Anschlussteil (4a) aus ferromagnetischem Material gebildet ist.

4. Geteilter Wankstabilisator nach Anspruch 1, bei dem die Stabilisatorteile (2a) jeweils über ein Stabilisatorlager (3) drehbar gelagert und jeweils mit einem Anschlussteil (4a) zum Anschließen des Aktuators (1) versehen sind, wobei wenigstens eines der beiden magnetisch kodierten Anschlussteile (4a) den Primärsensor (5) bildet.

5. Geteilter Wankstabilisator nach Anspruch 1, bei dem das Anschlussteil (4a) als Flansch (4) ausgebildet ist, der an den Aktuator (1) angeflanscht werden kann.

6. Geteilter Wankstabilisator nach Anspruch 1, bei dem das magnetisch codierte Anschlussteil (4a) hohl ausgeführt ist.

7. Geteilter Wankstabilisator nach den Ansprüchen 1 und 7, bei dem der Sekundärsensor (6) in dem hohlen Anschlussteil (4a) angeordnet ist.

## Patentansprüche (Patentansprüche für folgende(n) Vertragsstaat(en): DE)

1. Geteilter Wankstabilisator eines Kraftfahrzeuges, zwischen dessen beiden Stabilisatorteilen (2a) ein Aktuator (1) für eine Torsion der Stabilisatorteile (2a) angeordnet ist, wobei wenigstens eines der Stabilisatorteile (2a) mit einem die Torsion übertragenden Anschlussteil (4a) zum Anschließen des Aktuators (1) versehen ist, wobei das Anschlussteil (4a) magnetisch kodiert ist, wobei das Anschlussteil (4a) einerseits drehfest mit dem Stabilisatorteil (2a) verbunden ist und andererseits drehfest mit dem Aktuator (1) verbunden ist, und wobei ein Sensor (7) zur berührungslosen Messung eines in dem Stabilisatorteil (2a) wirkenden Torsionsmomentes vorgesehen ist, wobei der Sensor (7) das magnetisch kodierte Anschlussteil (4a) als Primärsensor (5) sowie einen Magnetfeldsensor (6a) als Sekundärsensor (6) aufweist, der Änderungen des magnetischen Feldes des Primärsensors (5) in ein elektrisches Signal umwandelt, **dadurch gekennzeichnet, dass** das Anschlussteil (4a) durch einen hohlen Flansch (4) gebildet ist, der mit seinem hülsenförmigen Abschnitt (4c) einerseits drehfest an das eine Stabilisatorteil (2a) angeschlossen ist und der mit seinem Radialbord (4d) andererseits drehfest an den Aktuator 1 angeschlossen ist, wobei wenigstens der hülsenförmige Abschnitt (4c) des Flansches (4) magnetisch kodiert ist, und wobei der Sekundärsensor (6) in dem hülsenförmigen Abschnitt (4c) das Flansches (4) angeordnet ist.

2. Geteilter Wankstabilisator nach Anspruch 1, bei dem das Anschlussteil (4a) aus ferromagnetischem Material gebildet ist.

3. Geteilter Wankstabilisator nach Anspruch 1, bei dem die Stabilisatorteile (2a) jeweils über ein Stabilisatorlager (3) drehbar gelagert und jeweils mit einem Anschlussteil (4a) zum Anschließen des Aktuators (1) versehen sind, wobei wenigstens eines der beiden magnetisch kodierten Anschlussteile (4a) den Primärsensor (5) bildet.

## Claims (Claims for the following Contracting State(s): AT, BE, CH, DK, ES, FR, GB, GR, IT, LI, LU, MC, NL, SE)

1. Split anti-roll bar of a motor vehicle, between the two anti-roll bar parts (2a) of which an actuator (1) for a torsion of the anti-roll bar parts (2a) is arranged, a sensor (7) being provided for contactless measurement of a torsional moment which acts in the anti-roll bar part (2a), **characterized in that** at least one of the anti-roll bar parts (2a) is provided with a torsion-transmitting connector part (4a) for connecting the actuator (1), the connector part (4a) being magnetically encoded, the sensor (7) having the magnetically encoded connector part (4a) as primary sensor (5) and a magnetic field sensor (6a) as secondary sensor (6) which converts changes of the magnetic field of the primary sensor (5) into an electric signal.

2. Split anti-roll bar according to Claim 1, in which the connector part (4a) is connected on one side fixedly to the anti-roll bar part (2a) so as to rotate with it, and is connected on the other side fixedly to the actuator (1) so as to rotate with it.

3. Split anti-roll bar according to Claim 1, in which the connector part (4a) is formed from ferromagnetic material.

4. Split anti-roll bar according to Claim 1, in which the anti-roll bar parts (2a) are mounted in each case rotatably via an anti-roll bar bearing (3) and are provided in each case with a connector part (4a) for connecting the actuator (1), at least one of the two magnetically encoded connector parts (4a) forming the primary sensor (5).

5. Split anti-roll bar according to Claim 1, in which the connector part (4a) is configured as a flange (4) which can be flange-connected to the actuator (1).

6. Split anti-roll bar according to Claim 1, in which the magnetically encoded connector part (4a) is of hollow configuration.

7. Split anti-roll bar according to Claims 1 and 7, in which the secondary sensor (6) is arranged in the hollow connector part (4a).

## Claims (Claims for the following Contracting State(s): DE)

1. Split anti-roll bar of a motor vehicle, between the two anti-roll bar parts (2a) of which an actuator (1) is arranged for a torsion of the anti-roll bar parts (2a), at least one of the anti-roll bar parts (2a) being provided with a torsion-transmitting connector part (4a) for connecting the actuator (1), the connector part (4a) being magnetically encoded, the connector part (4a) being connected on one side fixedly to the anti-roll bar part (2a) so as to rotate with it, and being connected on the other side fixedly to the actuator (1) so as to rotate with it, and a sensor (7) being provided for contactless measurement of a torsional moment which acts in the anti-roll bar part (2a), the sensor (7) having the magnetically encoded connector part (4a) as primary sensor (5) and a magnetic field sensor (6a) as secondary sensor (6) which converts changes of the magnetic field of the primary sensor (5) into an electric signal, **characterized in that** the connector part (4a) is formed by way of a hollow flange (4) which is connected on one side by way of its sleeve-shaped section (4c) fixedly to the one anti-roll bar part (2a) so as to rotate with it, and which is connected on the other side by way of its radial rim (4d) fixedly to the actuator 1 so as to rotate with it, at least the sleeve-shaped section (4c) of the flange (4) being magnetically encoded, and the secondary sensor (6) being arranged in the sleeve-shaped section (4c) of the flange (4).

2. Split anti-roll bar according to Claim 1, in which the connector part (4a) is formed from ferromagnetic material.

3. Split anti-roll bar according to Claim 1, in which the anti-roll bar parts (2a) are mounted rotatably in each case via an anti-roll bar bearing (3) and are provided in each case with a connector part (4a) for connecting the actuator (1), at least one of the two magnetically encoded connector parts (4a) forming the primary sensor (5).

## Revendications (Revendications pour l'(les) Etat(s) contractant(s) suivant(s): AT, BE, CH, DK, ES, FR, GB, GR, IT, LI, LU, MC, NL, SE)

1. Stabilisateur antiroulis divisé pour un véhicule automobile, entre les deux parties de stabilisateur (2a) duquel est disposé un actionneur (1) pour une torsion des parties de stabilisateur (2a), un capteur (7) pour une mesure sans contact d'un couple de torsion agissant dans la partie de stabilisateur (2a) étant prévu, **caractérisé en ce qu'**au moins l'une des parties de stabilisateur (2a) est pourvue d'une partie de raccordement (4a) transmettant la torsion pour le raccordement de l'actionneur (1), la partie de raccordement (4a) étant pourvue d'un code magnétique, le capteur (7) présentant en tant que capteur primaire (5), la partie de raccordement (4a) à code magnétique, ainsi qu'un capteur de champ magnétique (6a) en tant que capteur secondaire (6), qui convertit les variations du champ magnétique du capteur primaire (5) en un signal électrique.

2. Stabilisateur antiroulis divisé selon la revendication 1, dans lequel la partie de raccordement (4a) est connectée d'une part de manière solidaire en rotation à la partie de stabilisateur (2a) et est connectée d'autre part de manière solidaire en rotation à l'actionneur (1).

3. Stabilisateur antiroulis divisé selon la revendication 1, dans lequel la partie de raccordement (4a) est formée d'un matériau ferromagnétique.

4. Stabilisateur antiroulis divisé selon la revendication 1, dans lequel les parties de stabilisateur (2a) sont chacune supportées à rotation par le biais d'un palier de stabilisateur (3) et sont chacune pourvues d'une partie de raccordement (4a) pour le raccordement de l'actionneur (1), au moins l'une des deux parties de raccordement à codage magnétique (4a) formant le capteur primaire (5).

5. Stabilisateur antiroulis divisé selon la revendication 1, dans lequel la partie de raccordement (4a) est réalisée sous forme de bride (4) qui peut être bridée à l'actionneur (1).

6. Stabilisateur antiroulis divisé selon la revendication 1, dans lequel la partie de raccordement à codage magnétique (4a) est réalisée sous forme creuse.

7. Stabilisateur antiroulis divisé selon les revendications 1 et 7, dans lequel le capteur secondaire (6) est disposé dans la partie de raccordement creuse (4a).

## Revendications (Revendications pour l'(les) Etat(s) contractant(s) suivant(s): DE)

1. Stabilisateur antiroulis divisé pour un véhicule automobile, entre les deux parties de stabilisateur (2a) duquel est disposé un actionneur (1) pour une torsion des parties de stabilisateur (2a), au moins l'une des parties de stabilisateur (2a) étant pourvue d'une partie de raccordement (4a) transmettant la torsion pour le raccordement de l'actionneur (1), la partie de raccordement (4a) étant pourvue d'un code magnétique, la partie de raccordement (4a) étant connectée d'une part de manière solidaire en rotation à la partie de stabilisateur (2a) et étant connectée d'autre part de manière solidaire en rotation à l'actionneur (1), et un capteur (7) pour une mesure sans contact d'un couple de torsion agissant dans la partie de stabilisateur (2a) étant prévu, le capteur (7) présentant en tant que capteur primaire (5), la partie de raccordement (4a) à code magnétique, ainsi qu'un capteur de champ magnétique (6a) en tant que capteur secondaire (6), qui convertit les variations du champ magnétique du capteur primaire (5) en un signal électrique, **caractérisé en ce que** la partie de raccordement (4a) est formée par une bride creuse (4) qui est raccordée par sa portion en forme de douille (4c) d'une part de manière solidaire en rotation à l'une des parties de stabilisateur (2a) et qui est raccordée par son bord radial (4d) d'autre part de manière solidaire en rotation à l'actionneur (1), au moins la portion en forme de douille (4c) de la bride (4) étant pourvue d'un code magnétique, et le capteur secondaire (6) étant disposé dans la portion en forme de douille (4c) de la bride (4).

2. Stabilisateur antiroulis divisé selon la revendication 1, dans lequel la partie de raccordement (4a) est formée d'un matériau ferromagnétique.

3. Stabilisateur antiroulis divisé selon la revendication 1, dans lequel les parties de stabilisateur (2a) sont chacune supportées à rotation par le biais d'un palier de stabilisateur (3) et sont chacune pourvues d'une partie de raccordement (4a) pour le raccordement de l'actionneur (1), au moins l'une des deux parties de raccordement à codage magnétique (4a) formant le capteur primaire (5).
